# EUROPÄISCHE PATENTSCHRIFT

(11) **EP 1 048 555 B1**
(45) Veröffentlichungstag und Bekanntmachung des Hinweises auf die Patenterteilung: **02.06.2004**
(21) Anmeldenummer: 00107635.5
(22) Anmeldetag: 08.04.2000
(51) Int. Cl.: B62D 33/06

(54) **Verschwenkbare Herausfallsicherung für Liegen in Nutzfahrzeugen oder Wohnmobilen**
Restraining structure for a bunk bed in commercial vehicles or campers
Barrière latérale pour lit de cabines de camions ou de camping cars

(30) Priorität: 29.04.1999 DE 19919657
(43) Veröffentlichungstag der Anmeldung: 02.11.2000
(73) Patentinhaber: MAN Nutzfahrzeuge Aktiengesellschaft, 80976 München (DE)
(72) Erfinder: Koch, Erich, Dipl.-Ing., 85757 Karlsfeld (DE); Schönegger-Fösleitner, Erich, 4400 Steyr (AT); Watzek, Gerhard, Dipl.-Ing., 80935 München (DE); Arnberger, Alois, 4400 Steyr (AT)

(56) Entgegenhaltungen:
- EP-A- 0 428 829
- US-A- 4 217 670
- US-A- 5 461 735

## Beschreibung

### Stand der Technik

Die. Erfindung geht aus von einer verschwenkbaren Herausfallsicherung für Liegen in Nutzfahrzeugen oder Wohnmobilen gemäß der Gattung von Patentanspruch 1.

Aus dem Stand der Technik sind Herausfallsicherungs-Vorrichtungen für Liegen bekannt, bei welchen der Fangkörper durch ein Netz gebildet wird, welches durch Entrollen oder Verschwenken - z.B. wie in der DE 43 22 434 C1 beschrieben - zwischen der Liege und der umgebenden Fahrerhausstruktur eines Nutzfahrzeugs aufspannbar ist. Da zur Fixierung des Fangkörpers an den Fahrerhauswänden oder -dächern Befestigungspunkte notwendig sind, entsteht insbesondere bei Variantenvielfalt ein relativ hoher Fertigungsaufwand, z.B. für den Fall von wahlweiser Ausstattung des Fahrerhauses mit einer oder mit zwei Liegen. Außerdem beanspruchen diese Fangkörper auch im aufgerollten oder eingeklappten Zustand relativ viel Platz oder sind optisch unvorteilhaft. Im weiteren kann es schwierig sein, den Fangkörper in Wirkstellung zu bringen, um z.B. Gepäckstücke zu sichern, wenn die betätigende Person dabei nicht selbst auf der Liege liegt. Die Möglichkeit, den Fangkörper auch an der Fahrerhausstruktur zu befestigen, besteht in der Regel nur für eine obere Liege, so daß für eine zweite, untere Liege ein anderes Fangkörpersystem vorgesehen werden muß, wodurch sich die Teilevielfalt erhöht und Kontinuität im Interieur-Erscheinungsbild verloren geht.

Deshalb wurden Fangkörpersysteme entwickelt, welche ausschließlich an der Liege befestigt sind. Dabei werden die Fangkörper meist um Achsen verschwenkt, welche quer oder parallel zur Fahrtrichtung angeordnet sind. Fangkörper mit quer zur Fahrtrichtung angeordneten Schwenkachsen werden im Nichtgebrauchsfall unter die Liege eingeklappt. Die Betätigung des Fangkörpers ist dabei für den Liegenbenutzer umständlich, da die untere Liege hochgehoben werden muß, um den Fangkörper aus seiner Ablagestellung ausschwenken zu können.

Aus der EP 0 691 260 B1 ist ein L-förmiger Sicherungsbügel bekannt, der um eine Schwenkachse parallel zur Fahrtrichtung in Gebrauchslage geschwenkt wird. Durch die Lagerung an einem einzigen Lagerpunkt entsteht dabei eine sehr ungünstige Krafteinleitung in die Liege, außerdem kann der Sicherungsbügel in seiner abgeklappten Stellung durch seine geometrische Ausführung die Zugängigkeit zu Stauräumen unter der Liege behindern. Aus diesem Grund ist auch eine Verwendung dieses Systems für eine obere Liege nicht sinnvoll.

Die gattungsgemäβe EP 0 428 829 B1, offenbart eine Fahrerhaus-Schlafliegen-Herausfallsicherung mit einer ein- und ausschwenkbaren Einrichtung mit Parallelogramm-Kinematik, welche an der in Fahrtrichtung weisenden Stirnseite einer Liege angeordnet ist und die sich im eingeschwenkten Zustand in der Ebene der Liege befindet und im ausgeschwenkten Zustand eine Herausfallsicherung bildet. Die Hebel und Koppeln der Parallelogramm-Kinematik sind durch Gelenke gegeneinander verschwenkbar und im eingeschwenkten Zustand ineinander verschachtelt, was wegen der stirnseitigen Anordnung an der Liege gut sichtbar ist und optisch ungünstig wirkt. Außerdem besteht wegen der unverkleideten Hebel, Koppeln und Gelenke Verletzungsgefahr. Durch Gelenkspiel in den Gelenken können während der Fahrt zudem störende Klappergeräusche entstehen.

Der vorliegenden Erfindung liegt demgegenüber'die Aufgabe zugrunde, eine verschwenkbare Herausfallsicherungs-Vorrichtung für Liegen in Nutzfahrzeugen oder Wohnmobilen der eingangs erwähnten Art zu schaffen, welche optisch vorteilhaft, verletzungshindernd und sowohl in der ein geschwenkten wie auch in der ausgeschwenkten Stellung klapperfrei ist.

Erfindungsgemäß wird diese Aufgabe durch die kennzeichnenden Merkmale von Anspruch 1 gelöst.

### Vorteile der Erfindung

Die erfindungsgemäße verschwenkbare Herausfallsicherung hat den Vorteil, daß durch die Aufnahme der Lenker, der Gelenkverbindungen und der Hebelmechanik im Hohlprofil des Querbalkens in der eingeschwenkten Stellung wenig Platz beansprucht wird und Verletzungen an vorstehenden Kanten vermieden werden. Zudem ist bei unteren Liegen die Liege als Sitzbank benutzbar möglich und es entsteht ein optisch ruhiger Eindruck.

Durch die "Übertotpunktkinematik" der Hebelmechanik und der Federmittel wird die Herausfallsicherung sowohl in der eingeschwenkten wie auch in der ausgeschwenkten Stellung klapperfrei gegen die vorgesehenen Anschlagflächen vorgespannt, wodurch keine zusätzlichen Verriegelungselemente notwendig sind und die Schwenkbetätigung von der Totpunktlage aus nach beiden Seiten unterstützt wird.

Unterschiedlich lange Herausfallsicherungen können durch eine Verwendung von gleichen Lenkern, gleichen Gelenkverbindungen, gleicher Hebelmechanik und gleichen Federmitteln lediglich durch unterschiedlich lange Querbalken erzeugt werden. Darüber hinaus kann die Herausfallsicherung gemäß der Erfindung sowohl für obere als auch für untere Liegen verwendet werden.

Durch die in den Unteransprüchen aufgeführten Maßnahmen sind vorteilhafte Weiterbildungen und Verbesserungen der im Patentanspruch 1 angegebenen verschwenkbaren Herausfallsicherung möglich.

Gemäß einer besonders zu bevorzugenden Maßnahme sind die unteren Enden der Lenker als bezüglich der Längserstreckung der Lenker winkelige Auskröpfungen ausgebildet und durch Gelenke an der Stirnseite der Liege schwenkbar angelenkt, von denen ausgehend sich in eine Richtung erste Anschlagflächen für die ausgeschwenkte Stellung und in Gegenrichtung hierzu symmetrische zweite Anschlagflächen für die eingeschwenkte Stellung erstrecken, gegen welche jeweils voneinander wegweisende Seitenflächen der winkeligen Auskröpfungen anschlagbar sind. Der Querbalken ist bezüglich seiner Längsmittelachse mit Gelenkaufnahmen für Gelenke versehen.

Durch diese spezielle Ausbildung der Anschlagflächen, der Lenker und des Querbalkens kann die Schwenkrichtung der Herausfallsicherung auf einfache Weise umgekehrt werden, indem die Lenker um ihre Längsachse um 180 Grad gedreht an der Liege montiert und die Federmittel an den symmetrischen Gelenkaufnahmen am Querbalken angelenkt werden. Damit sind durch Gleichteile unterschiedliche Varianten von Herausfallsicherungs-Vorrichtungen darstellbar und eine schnelle und flexible Anpassung an links- oder rechtsgelenkte Nutzfahrzeuge möglich. Insbesondere wird ein Einschwenken zur Beifahrerseite hin ermöglicht, um den Fahrersitzverstellbereich nicht zu beengen.

Eine besonders zu bevorzugende Weiterbildung der Erfindung sieht vor, daß der Querbalken als ein aus zwei Profilschalen zusammengesetztes U-Profil ausgebildet ist, welches vorzugsweise aus Kunststoff besteht. Die Ausführung des Querbalkens als zweischaliges Kunststoffteil ermöglicht eine einfache Montage, indem die vom U-Profil ummantelten Gelenkverbindungen, Lenker und Federmittel an einer der Profilschalen vormontiert werden und anschließend die andere Profilschale aufgesetzt wird.

In der Zeichnung ist ein Ausführungsbeispiel der Erfindung schematisch dargestellt.

Es zeigt:
- Fig.1: den Einbau der Herausfallsicherung in ausgeschwenkter Stellung in Schnittdarstellung,
- Fig. 2: den Einbau der Herausfallsicherung in eingeschwenkter Stellung in Schnittdarstellung,
- Fig. 3: den Einbau der Herausfallsicherung für eine untere Liege, relativ zum Fahrersitz.
- Fig. 4: die Lagerung der Herausfallsicherung,
- Fig. 5: einen Querschnitt der Herausfallsicherung Griff,
- Fig. 6: eine verdeckte Lagerung im Querbalken.

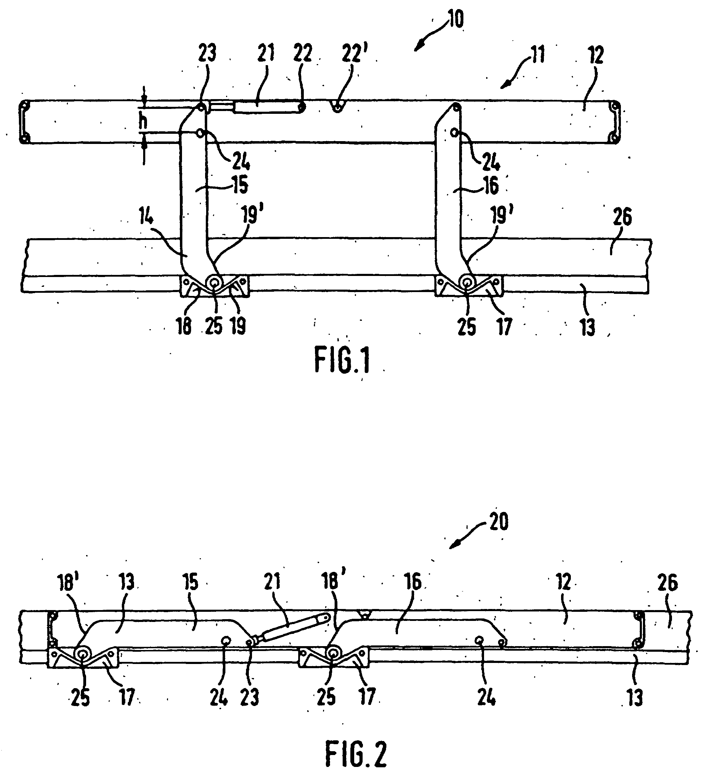

Die Fig. 1 zeigt die Vorderansicht einer bevorzugten Ausführungsform einer verschwenkbaren Herausfallsicherung 10 gemäß der Erfindung in ausgeschwenkter Stellung 11. Die Herausfallsicherung 10 ist an dem vorderen Rohr 13 einer Liege eines Nutzfahrzeuges quer zur Fahrtrichtung eingebaut und umfaßt einen oberen Querbalken 12, zwei Lenker 15, 16 und zwei Konsolen 17. Diese Teile sind über Gelenke 24, 25 miteinander verbunden.

Damit ist ein Viergelenk gebildet. In dieses Viergelenk wird über eine z. B. Gasfeder 21 ein Moment eingeleitet. Das Moment auf das Viergelenk wird dadurch ausgeübt, daß der Anlenkpunkt 23 der Gasfeder 21 außerhalb der Gelenklagerstellen 24 ist und die Wirklinie der Kraft der Gasfeder 21 nicht durch eine der Gelenklagerstellen 24, 25 geht.

Durch die Lenker 15,16 die jeweils an ihrem unteren Ende 14 eine Schräge 18' (Fig. 2) aufweisen, die in ausgeschwenkter Stellung an jeweils einer Anlagefläche 18 der Konsolen 17 anliegen, wird in Verbindung mit den Lagerstellen 25 in den Kohsolen 17 das eingeleitete Moment der Gasfeder 21 aufgenommen. Dadurch ergibt sich eine stabile Lage des Viergelenkes, das im Fahrbetrieb z. B. auch kläpperfrei ist.

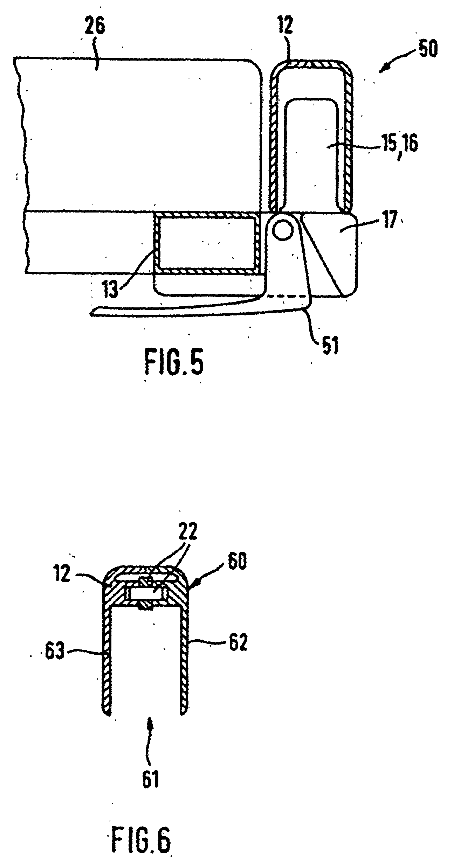

Der Querbalken 12 ist ein nach unten geöffnetes U-Profil 61 (Fig. 6) aus Stahl oder Kunststoff, bei dem zeichnerisch in Fig. 1 und Fig. 2 durch die Schnittdarstellung die vordere Hälfte des U-Profiles weggelassen ist. Dieser Querbalken 12 ist auch Bedienelement, um die Herausfallsicherung 10 von der ausgeschwenkten Stellung 11 (Gebrauchsstellung) in die Nichtgebrauchsstellung 20 zu bringen und umgekehrt. Dabei hat die Gasfeder 21 den Vorteil, daß, wenn sie eine eingebaute Dämpfung hat, der Klappvorgang gedämpft verläuft.

Die Konsolen 17 sind zeichnerisch im Schnitt dargestellt, damit die Anlageflächen 18, 19 gut erkennbar sind. Die Konsolen 17 umgreifen stirnseitig und unterseitig das vordere Rohr 13 der Liege und sind mit dem Rohr 13 verschraubt. Das Lägerauge 22' im Querbalken 12 ist Lagerstelle der Gasfeder 21 für den entgegengesetzten Einbau, wie gezeichnet.

Die Fig. 2 zeigt die Herausfallsicherung 10 in eingeschwenkter Stellung 20. Die Lenker 15, 16 sind um 90° geschwenkt und liegen mit ihren Auflageflächen 19' an den Auflageflächen 19 der Konsole 17 an. Für eine stabile und u. a. klapperfreie Lagerung auch in dieser Lage sorgt die Gasfeder 21, die das Viergelenk mit den Lagerpunkten 24, 25 durch die Federkraft, deren Wirklinie nicht durch einen der Lagerpunkte 24, 25 geht, mit einem Moment in Richtung eingeklappte Stetlung 20 beaufschlagt.

Der Querbalken 12 ist mit seiner oberen Fläche in eingeklappter Stellung 20 auf der gleichen Höhe, wie die obere Fläche der Liegenauflage 26. Damit ist der Platzbedarf der Herausfallsicherung 10 im eingeschwenkten Zustand 20 auf ein Minimum reduziert. Der Querbalken 12 ist als Bedienteil zum Verschwenken der Vorrichtung im eingeschwenkten Zustand 20 auch gut greifbar, da auf der Rückseite des Querbalkens 12 die (Gummi-) Liegenauflage 26 leicht verformbar ist.

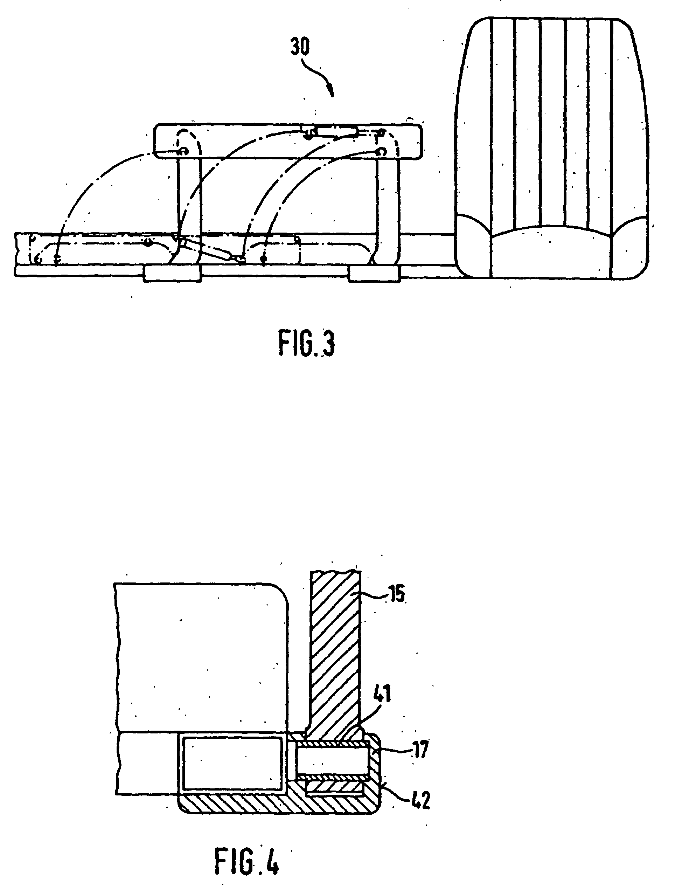

Die Fig. 3 zeigt die Anordnung 30 und Kinematik der Herausfallsicherung 10 und den Fahrersitz.

Die Fig. 4 zeigt die Konsole 17 mit den Anschlüssen an das Rohr 13 der Liege. Die Lagerbuchse 41 für die Lagerung der Lenker 15 muß in einer Vormontage von der Anschlagfläche her eingebracht werden, da man aus designerischen Gründen die Sichtseite 42 geschlossen haben will.

Die Fig. 5 zeigt den Zusammenbau 50 der Herausfallsicherung 10 im Querschnitt 50 in der Nichtgebrauchsstellung. Innerhalb des Querträgers 12 sind die Lenker 15, 16 und, nicht eingezeichnet, die Gasfeder 21 untergebracht. Die Konsole 17 weist einen Griff 51 auf, mit dem die obere Liege in der Gebrauchs- und Nichtgebrauchslage verriegelbar bzw. entriegelbar ist. Der Querbalken 12 schließt in der Höhe mit der Liegenauflage 26 ab. Die Konsole 17 ist am vorderen Rohr 13 der Liege angeschraubt.

Die Fig. 6 zeigt die verdeckte Lagerung 60 der Gasfeder 21 im Querbalken 12. Vorzugsweise ist das U-Profil 61 aus zwei Schalenhälften 62, 63 gebildet, wobei die Teile für die Lagerstellen 22 und die Gasfeder 21 im Querbalken vor dem Zusammenfügen der zwei Schalenhälften 62, 63 eingelegt werden.

## Patentansprüche

1. Verschwenkbare Herausfallsicherung für Liegen in Nutzfahrzeugen oder Wohnmobilen, welche einen Parallelogramm-Schwenkmechanismus aufweist und sich in einer eingeschwenkten Stellung im wesentlichen in der Ebene der Auflage der Liege befindet und in einer ausgeschwenkten Stellung eine Herausfaflsicherung bildet, mit mindestens einem mittels Gelenkverbindungen an Lenkern geführten Querbalken, wobei die Lenker an dem vorderen Rohr der Liege schwenkbar angeordnet sind, **dadurch gekennzeichnet, daß** zwischen mindestens einem der Lenker (15, 16) und dem Querbalken (12) eine mit Federmitteln (21) zusammenwirkende Hebelmechanik (22, 23, 24, 25, h) vorgesehen ist, durch welche die Lenker (15, 16) mit den Flächen (18') in der ausgeschwenkten Stellung (11) gegen erste Anschlagflächen (18) und, hierzu gegenläufig nach Überwindung einer Totpunktlage, in der eingeschwenkten Stellung (20) mit den Flächen (19') gegen zweite Anschlagflächen (19) vorspannbar sind, und daß der Querbalken (12) durch ein U-Profil (61) gebildet ist, in dessen Profilinnenraum in der eingeschwenkten Stellung (20) die Lenker (15, 16) und die Federmittel (21) aufgenommen sind.

2. Verschwenkbare Herausfallsicherung nach Anspruch 1, **dadurch gekennzeichnet, daß** Lagerungen (22, 23, 25) verdeckt, also von außen her nicht sichtbar sind.

3. Verschwenkbare Herausfallsicherung nach Anspruch 1, **dadurch gekennzeichnet, daß** der Querbalken (12) auch Bedienteil zum Verschwenken der Herausfallsicherung (10) ist.

4. Verschwenkbare Herausfallsicherung nach Anspruch 1, **dadurch gekennzeichnet, daß** die Konsole (17) wahlweise einen Griff (51) zum Lösen oder Verriegeln der Liege in der Gebrauchs- oder Nichtgebrauchsstellung aufweist.

5. Verschwenkbare Herausfallsicherung nach Anspruch 1, **dadurch gekennzeichnet**, däß, das U-Profil (61) aus zwei Schalen (62, 63),gebildet ist, wobei vor dem Zusammenfügen der beiden Hälften (62, 63) in einer Vormontage Lagerstellen (22, 23, 24) und Federmittel (21) eingesetzt werden.

6. Verschweßkbare Herausfallsicherung (10) nach Anspruch 1, **dadurch gekennzeichnet, daß** die Herausfallsicherung (10) als fertiger Modul an das Rohr (13) der Liege anschraubbar ist.

## Claims

1. Slewable anti-drop-out safety device for bunks in commercial vehicles or dormobiles, which device has a parallelogram-type slewing mechanism and, when in a slewed-in position, is basically in the plane of the surface of the bunk and, when in a slewed-out position, forms an anti-drop-out safety device, with at least one transverse bar guided by means of link joints on arms slewably arranged on the front tube of the bunk, **characterised in that** between at least one of the arms (15, 16) and the transverse bar (12) a lever mechanism (22, 23, 24, 25, h) acting together with springs (21) is provided, by means of which lever mechanism the arms (15, 16) with the faces (18') can, when in the slewed-out position (11), be preloaded against first contact faces (18) and can, in opposite direction relative to said preloading action, after having overcome a dead-point position, when in the slewed-in position (20), be preloaded with the faces (19') against second contact faces (19) and that the transverse bar (12) is designed as a U-section (61), which, in the slewed-in position (20), accommodates the arms (15, 16) and the springs (21) in its interior space.

2. Slewable anti-drop-out safety device according to Claim 1, **characterised in that** bearings (22, 23, 25) are concealed, ie they cannot be seen from the outside.

3. Slewable anti-drop-out safety device according to Claim 1, **characterised in that** the transverse bar (12) doubles as an operating unit for slewing the anti-drop-out safety device (10).

4. Slewable anti-drop-out safety device according to Claim 1, **characterised in that** the console (17) optionally has a handle (51) for releasing or locking the bunk in the use or non-use position.

5. Slewable anti-drop-out safety device according to Claim 1, **characterised in that** the U-section (61) is composed of two shells (62, 63), whereby bearings (22, 23, 25) and springs (21) are inserted as preassembled units before the two halves (62, 63) are joined together.

6. Slewable anti-drop-out safety device according to Claim 1, **characterised in that** the anti-drop-out safety device (10) is a ready-to-fit module that can be bolted on to the tube (13) of the bunk.

## Revendications

1. Protection anti-chute rabattable pour couchettes dans des véhicules ou des autocaravanes, qui présente un mécanisme de pivotement en parallélogramme et se trouve dans une position rabattue essentiellement au niveau de la base de la couchette et constitue en position relevée une protection anti-chute, avec au minimum une barre transversale guidée au niveau des bras au moyen de liaisons articulées, auquel cas les bras sont disposés de manière rabattable sur le tube avant de la couchette, **caractérisée par le fait qu'**un dispositif mécanique de levage (22, 23, 24, 25, h) agissant avec des moyens à ressort (21) est prévu entre au moins un des bras (15, 16) et la barre transversale (12) et, grâce à ce dispositif mécanique, les bras (15, 16) avec les surfaces (18') peuvent être soumis à une précontrainte en position relevée (11) contre la première surface de butée (18) et, dans le sens inverse après avoir passé la position de point mort, en position rabattue (20) avec les surfaces (19') contre la deuxième surface de butée (19), et **par le fait que** la barre transversale (12) est constituée d'un profilé en U (61) dans l'intérieur profilé duquel les bras (15, 16) et les moyens à ressorts (21) sont logés en position rabattue.

2. Protection anti-chute rabattable selon la revendication 1, **caractérisée par le fait que** des paliers (22, 23, 25) sont recouverts, c'est-à-dire ne sont pas visibles de l'extérieur.

3. Protection anti-chute rabattable selon la revendication 1, **caractérisée par le fait que** la barre transversale (12) sert également de pièce de maniement pour rabattre la protection anti-chute (10).

4. Protection anti-chute rabattable selon la revendication 1, **caractérisée par le fait que** la console (17) présente au choix une poignée (51) de desserrage ou de verrouillage de la couchette dans la position d'utilisation ou de non utilisation.

5. Protection anti-chute rabattable selon la revendication 1, **caractérisé par le fait que** le profilé en U (61) est constitué de deux coquilles (62, 63), auquel cas des emplacements de palier (22, 23, 25) et des moyens à ressort (21) sont mis en place avant l'assemblage des deux moitiés (62, 63) lors d'un prémontage.

6. Protection anti-chute rabattable (10) selon la revendication 1, **caractérisée par le fait que** la protection anti-chute (10) peut être vissée en tant que module fini au tube (13) de la couchette.
